(19) Europäisches Patentamt / European Patent Office / Office européen des brevets

(11) **EP 3 560 011 B1**

(12) **EUROPÄISCHE PATENTSCHRIFT**

(45) Veröffentlichungstag und Bekanntmachung des Hinweises auf die Patenterteilung:
**03.02.2021 Patentblatt 2021/05**

(21) Anmeldenummer: **17823104.9**

(22) Anmeldetag: **19.12.2017**

(51) Int Cl.:
*H01M 10/42* (2006.01)  *H01M 10/44* (2006.01)
*H01M 10/0567* (2010.01)  *H01M 4/13* (2010.01)
*H01M 4/24* (2006.01)  *H01M 10/0525* (2010.01)
*H01M 10/0563* (2010.01)  *H01M 10/48* (2006.01)
*H01M 4/02* (2006.01)

(86) Internationale Anmeldenummer:
**PCT/EP2017/083649**

(87) Internationale Veröffentlichungsnummer:
**WO 2018/115016 (28.06.2018 Gazette 2018/26)**

(54) **WIEDERAUFLADBARE ELEKTROCHEMISCHE ZELLE MIT KERAMISCHER SEPARATORSCHICHT UND INDIKATORELEKTRODE**

RECHARGEABLE ELECTROCHEMICAL CELLS WITH CERAMIC SEPARATOR LAYER AND INDICATOR ELECTRODE

CELLULE ÉLECTROCHIMIQUE RECHARGEABLE AVEC UNE COUCHE DE SÉPARATEUR EN CÉRAMIQUE ET UNE ÉLECTRODE INDICATRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016 DE 102016125168**

(43) Veröffentlichungstag der Anmeldung:
**30.10.2019 Patentblatt 2019/44**

(73) Patentinhaber: **High Performance Battery Technology GmbH**
**53113 Bonn (DE)**

(72) Erfinder:
• **HAMBITZER, Günther**
**53113 Bonn (DE)**
• **MATERN, Wolfgang**
**47443 Moers (DE)**

(74) Vertreter: **Keenway Patentanwälte Neumann Heine Taruttis**
**PartG mbB**
**Postfach 10 33 63**
**40024 Düsseldorf (DE)**

(56) Entgegenhaltungen:
**EP-A2- 0 040 458    DE-A1-102013 112 385**
**US-A- 5 596 278    US-A- 5 737 114**

**Beschreibung**

TECHNISCHES GEBIET

Die Erfindung betrifft eine Batteriezelle nach Anspruch 1. Auf vielen technischen Gebieten haben elektrochemische wiederaufladbare Batteriezellen eine zunehmende Bedeutung. So gibt es im Rahmen der Energiewende einen erhöhten Bedarf an Batteriezellen für stationäre Anwendungen, wie Netzstabilisierung oder auch Netzpufferung und für die dezentrale Energieversorgung.

Im großen Umfang werden wiederaufladbare Batteriezellen auch für mobile Anwendungen eingesetzt, wie z. B. Mobiltelefone, Laptops, oder auch zunehmend für Elektrofahrzeuge. Insbesondere hierfür ist möglichst viel elektrische Energie pro Gewichts- und Volumeneinheit wichtig. In dieser Hinsicht ist Lithium (Li) als aktives Kation (Li$^+$) oder aktives Metall besonders vorteilhaft.

STAND DER TECHNIK

Wiederaufladbare Batteriezellen sind deshalb in der Praxis mittlerweile überwiegend Lithium-Ionen-Zellen. Ihre negative Elektrode besteht z. B. aus mit Kupfer (Cu) beschichtetem Kohlenstoff (C), beispielsweise Graphit ($C_6$), in den beim Laden Lithium-Ionen eingelagert werden (Insertion). Auch die positive Elektrode besteht aus einem Insertions- oder Interkalationsmaterial, das zur Aufnahme von aktiven Kationen geeignet ist. Bei herkömmlichen Batteriezellen kann die positive Elektrode auf Lithiumkobaltoxid ($LiCoO_2$) basieren, das zusammen mit einem Binder und einem elektronisch leitfähigen Zusatz auf ein Ableitelement aus Aluminium (Al) aufgetragen ist. Beide Elektroden sind sehr dünn (Dicke in der Regel kleiner als 100 $\mu$m). Beim Laden werden die aktiven Kationen aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyten, der die erforderliche Ionenbeweglichkeit gewährleistet. Herkömmliche Lithium-Ionen-Zellen enthalten einen Elektrolyten, der aus einem in einem organischen Lösungsmittel oder Lösungsmittelgemisch (z. B. auf Basis von Ethylencarbonat ($C_3H_4O_3$)) gelösten Lithiumsalz (z. B. $LiPF_6$) besteht. Diese werden nachfolgend als "organische Lithium-Ionen-Zellen" bezeichnet.

Lithium-Ionen-Zellen enthalten im Normalbetrieb keine Ansammlungen von metallischem Lithium. Problematisch sind organische Lithium-Ionen-Zellen hinsichtlich der Sicherheit. Sicherheitsrisiken werden insbesondere durch den organischen Elektrolyten verursacht. Wenn eine organische Lithium-Ionen-Zelle, z. B. wegen eines Produkt- bzw. Produktionsfehlers oder Überladens mit metallischer Lithiumabscheidung, Feuer fängt oder sogar explodiert, bildet das organische Lösungsmittel des Elektrolyten in Kombination mit anderen aktiven Materialien ein brennbares Gemisch.

Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Diese Maßnahmen sind umso aufwendiger, je höher die Kapazität der Zelle und damit das Gefährdungsrisiko sind. Sie führen damit zu erhöhten Kosten und erhöhen zusätzlich Volumen und Gewicht erheblich, was in einer verminderten Energiedichte resultiert.

Zum Zeitpunkt der Erfindung bestand sowohl für stationäre Anwendungen als auch für die Elektromobilität ein hohes Bedürfnis nach verbesserten wiederaufladbaren Batteriezellen, die insbesondere folgende Anforderungen erfüllen:

- Sicherheit durch Nichtbrennbarkeit;
- Langlebigkeit, also hohe kalendarische Lebensdauer, verbunden mit der Erkennung von Sicherheitsrisiken auch zum Ende der Lebensdauer;
- hohe Zyklen-Lebensdauer, also eine sehr hohe Zahl nutzbarer Lade- und Entladezyklen, auch bei hohen entnehmbaren Strömen, also hoher Leistungsdichte;
- hoher Energiewirkungsgrad über die gesamte Lebensdauer;
- Sicherheit, auch unter erschwerten Umweltbedingungen, wie in einem Fahrzeug, insbesondere mit Erkennung von möglichen Sicherheitsrisiken;
- sehr gute elektrische Leistungsdaten, insbesondere hohe spezifische Energie (Wh/kg) bzw. hohe Energiedichte (Wh/l) bei gleichzeitig hoher Leistungsdichte (W/l);
- möglichst niedrige Herstellkosten, d. h. kostengünstige und gut verfügbare Materialien sowie möglichst einfache und sichere Produktionsverfahren mit sehr geringen Ausschussraten;
- niedriger Kosten pro aus dem Energiespeicher entnommene Kilowattstunde, dieser ergibt sich aus hoher Zyklenzahl, hoher Energieeffizienz und niedrigen Herstellkosten. Die Herstellkosten sind u.a. massebezogen, so dass eine Erhöhung der spezifischen Energie in der Regel zu einer Kostenreduktion führt.

Eine weitere für die Praxis wichtige Anforderung ist z. B. die Tiefentladefähigkeit. So ist gerade für eine hohe Zahl von Batteriezellen, die seriell zu Batteriemodulen geschaltet werden, eine Entladefähigkeit jeder einzelnen Zelle auf 0 V wünschenswert. Dies ist bei den heutigen organischen Lithium-Ionen-Zellen in der Praxis nicht möglich, da diese bei einer Entladung unter 2,7 V irreversibel geschädigt werden.

DARSTELLUNG DER ERFINDUNG

Die zuvor genannten Anforderungen werden durch eine wiederaufladbare Batteriezelle erreicht, bei der die aktiven Kationen, die beim Laden der Batteriezelle an der negativen Elektrode durch Insertion bzw. Interkalation in ein Wirtsgitter oder durch Legierungsbildung oder durch Abscheidung als aktives Metall reagieren, aus der Alkalimetallgruppe (erste Hauptgruppe, Li, Na, K, Rb, Cs, Fr), Erdalkalimetallgruppe (zweite Hauptgruppe, Be, Mg, Ca, Sr, Ba, Ra) oder aus der Zinkgruppe (zweite Nebengruppe, Zn, Cd, Hg, Cn) des Periodensystems stammen. Lithium (Li) ist besonders bevorzugt. Aus diesen Gruppen der Kationen können auch Metalldithionite gebildet werden, insofern sie nicht elektronisch leitfähig sind. Nachfolgend wird ohne Beschränkung der Allgemeinheit auf Lithium als Kation ($Li^+$), das an der negativen Elektrode reagiert, Bezug genommen.

Der verwendete Elektrolyt enthält Schwefeldioxid ($SO_2$). Als "$SO_2$-haltiger Elektrolyt" wird ein Elektrolyt be-zeichnet, der $SO_2$ oder Reaktionsprodukte des $SO_2$ nicht nur als Zusatz in geringer Konzentration enthält, sondern bei dem die Beweglichkeit der Ionen, die den Ladungstransport bewirken zumindest teilweise durch das $SO_2$ oder durch die Reaktionsprodukte des $SO_2$ gewährleistet wird. Im Fall der aktiven Kationen aus der Gruppe der Alkalimetalle wird vorzugsweise Tetrahalogenoaluminat ($LAlX_4^-$) als Anion für das Leitsalz im Elektrolyt verwendet. Für das aktive Lithi-umkation wird vorzugsweise Lithiumtetrachloroaluminat ($LiAlCl_4$) als Leitsalz eingesetzt. Ohne Beschränkung der Allgemeinheit werden im Folgenden wiederaufladbare Batteriezellen mit einem $SO_2$-haltigen Elektrolyten mit Lithium als aktivem Kation beschrieben.

Bekannt sind auch wiederaufladbare Batteriezellen, die neben oder anstelle von Schwefeldioxid bzw. durch Reaktion mit Schwefeldioxid erzeugten Substanzen weitere bzw. andere Elektrolyte enthalten. Diese Elektrolyte können andere Leitsalze (z. B. Halogenide (X[F, Cl, Br, I]), Oxalate ($X[C_2O_4]$), Borate, Phosphate ($X[PO_4]$), Arsenate ($X[AsO_4]$), Gallate) und andere Lösungsmittel enthalten, die die Beweglichkeit der Ionen gewährleisten. Diese Lösungsmittel können dabei anorganische Lösungsmittel, organische Lösungsmittel oder ionische Flüssigkeiten bzw. Mischungen daraus sein. Als organische Lösungsmittel kommen bevorzugt auch gesättigte Kohlenwasserstoffe in Betracht.

Der Elektrolyt kann im Wesentlichen frei von organischen Materialien sein, wobei "im Wesentlichen" dahingehend zu verstehen ist, dass die Menge eventuell vorhandener organischer Materialien so gering ist, dass sie z. B. im Hinblick auf Brennbarkeit kein bedeutendes Sicherheitsrisiko darstellen.

Eine negative Elektrode kann im Wesentlichen eine aktive Masse enthalten, in welche die von der positiven Elektrode während des Ladens freigesetzten aktiven Kationen (bevorzugt $Li^+$) entweder insertieren oder interkalieren bzw. mit welcher die Kationen eine Legierung bilden. Diese aktive Masse kann Graphit, eine andere Kohlenstoffart, Lithiumtitanoxid ($Li_4Ti_5O_{12}$, LTO) oder Silizium (Si) sein.

Ohne Beschränkung der Allgemeinheit wird im Folgenden für die aktive Masse der negativen Elektrode das bevorzugte Graphit beschrieben.

Auch für die aktive Masse der positiven Elektrode kommt neben Lithiummetalloxiden (LiMO) und Lithiumme-tallphosphaten ($LiMPO_4$) eine Vielzahl an Substanzen, wie Lithiumsulfid ($Li_2S$), in Frage. Ohne Beschränkung der Allgemeinheit wird im Folgenden als aktive Masse der positiven Elektrode Lithiumeisenphosphat ($LiFePO_4$, LEP) ange-geben.

Wie dem Fachmann bekannt ist, können die positiven Elektroden neben den aktiven Massen Binder, wie z. B. fluorierte oder teilfluorierte Kohlenwasserstoffe, und elektronisch leitfähige Zusätze, wie z. B. Carbon Black, enthalten.

Sowohl bei organischen Lithium-Ionen-Zellen als auch bei Lithium-Ionen-Zellen mit $SO_2$-haltigen Elektrolyten ist aus Sicherheitsgründen die Abscheidung von metallischem Lithium zu vermeiden. Neben Gründen wie Produktionsfehlern, z. B. zu wenig aktive Masse (Graphit) in einer negativen Elektrode, kommt es immer dann zu Sicherheitsrisiken durch metallische Lithiumabscheidung, wenn die negativen Elektroden schneller irreversibel Kapazität verlieren und/oder ihren Innenwiderstand erhöhen als die positiven Elektroden. In diesem Fall kann die negative Elektrode, insgesamt oder lokal, nicht mehr bzw. nicht schnell genug die von der positiven Elektrode freigesetzten Lithiumionen aufnehmen.

Diese schnellere Degradation der negativen Elektroden lässt sich sowohl für die organischen Lithium-Ionen-Zellen als auch für die Lithium-Ionen-Zellen mit $SO_2$-haltigen Elektrolyten auf im Wesentlichen zwei unterschiedliche Ursachen zurückführen:

a) Herstellung der Batteriezellen in feuchter Umgebung bzw. Verwendung von nicht ausreichend getrockneten Substanzen:

Durch Freisetzung von Schwermetallionen, im Falle des LEP also Eisen-Ionen, aus der positiven Elektrode kommt es durch Metallabscheidung der Schwermetalle auf der Oberfläche bzw. in die Ionenkanäle der Lithium-Ionen der negativen Elektrode (z. B. Graphit) zur Blockade für den Ein- und Austritt der Lithium-Ionen und damit zu einem vielfach stärkeren irreversiblen Kapazitäts- und Leistungsverlust der negativen Elektrode als der positiven Elektrode.

Im Falle der Lithium-Ionen-Zellen mit $SO_2$-haltigen Elektrolyten mit trockenem LEP als aktive positive Masse können sich Eisenionen als Eisenchlorid lösen, wenn Chlorwasserstoff vorhanden ist, das mit dem Eisenphosphat reagiert. Feuchtes LEP enthält wohl in geringen Mengen Eisenoxide/-hydroxide, die ebenfalls mit Chlorwasserstoff reagieren. Der Chlorwasserstoff wird einerseits möglicherweise mit der Elektrolytlösung eingebracht und/oder bildet sich aus der Reaktion von z. B. auf dem LEP der positiven Elektrode haftendem Wasser mit dem Leitsalz Lithiumtetrachloroaluminat des $SO_2$-haltigen Elektrolyten.

Die Wassermenge in der Batteriezelle sollte also schon bei der Produktion der Batteriezelle sehr niedrig gehalten werden. Da eine nachträgliche Trocknung einer in feuchten Räumen gefertigten Batteriezelle, insbesondere bei Zellkapazitäten von mehr als 5 Ah, bei den wegen des Binders beschränkten maximalen Temperaturen praktisch nicht möglich ist, ist die Verwendung eines Trockenraums mit einem Taupunkt von unter -30 °C, besser unter -40 °C, bevorzugt unter -50 °C und besonders bevorzugt unter/gleich -60 °C für die Herstellung der positiven Elektrode und den Zusammenbau der Komponenten der Batteriezelle günstig. Der Binder in der positiven Elektrode bindet die Körner der aktiven positiven Massemechanisch aneinander an und besteht typischerweise aus fluorierten oder teilfluorierten Kohlenwasserstoffen. Die negative Elektrode sollte entweder durch Herstellung in einem Trockenraum oder durch Nachtrocknung vor Einbringung in den Trockenraum zum Zusammenbau der Komponenten zur Batteriezelle ebenfalls, wie alle anderen Komponenten der Batteriezelle, nahezu wasserfrei sein, d.h. einen Wassergehalt von unter 500 ppm, vorzugsweise unter 100 ppm und besonders bevorzugt unter 50 ppm aufweisen.

b) Die zweite Ursache basiert auf den chemischen Prozessen in der Batteriezelle und führt zur Innenwiderstandserhöhung durch Aufbau einer polymeren Deckschicht und/oder Verringerung der mit Elektrolyt gefüllten Porenvolumina der negativen Elektrode:

Im Falle der organischen Lithium-Ionen-Zellen reagiert der organische Elektrolyt schon ab dem ersten Laden an der Oberfläche der aktiven Masse (Graphit) der negativen Elektrode unter Bildung einer polymeren Deckschicht auf dieser Oberfläche ab. Die mit der Zeit zunehmend aufwachsende polymere Deckschicht führt zu einer Reduktion der Porenquerschnitte. Da die ionische Leitfähigkeit der gebildeten polymeren Deckschicht geringer ist als die des organischen Elektrolyten, folgt damit eine zunehmende Erhöhung des ionischen Innenwiderstandes der negativen Elektrode. Für die Bildung der polymeren Deckschicht wird Kapazität verbraucht. Auf Grund dessen gibt es eine direkte Korrelation zwischen Kapazitätsabnahme und Innenwiderstandserhöhung der organischen Lithium-Ionen-Zelle, bzw. zwischen Kapazitäts- und Leistungsverlust. Wird die organische Lithium-Ionen-Zelle mit dicker polymerer Deckschicht schnell geladen, so kann auf der negativen Elektrode metallisches Lithium abgeschieden werden.

Im Falle der Lithium-Ionen-Zelle mit $SO_2$-haltigen Elektrolyten bildet sich auf der Oberfläche der aktiven Masse (Graphit) der negativen Elektrode eine monomolekulare Schicht Lithiumdithionit ($LiS_2O_4$). Wie in der WO 2015/067795 A1 beschrieben, reagiert das Lithiumdithionit unter ladungsverzehrender Neubildung solange ab, bis sich ein Gleichgewicht eingestellt hat. Dabei fallen entsprechend der Reaktionsgleichung die Feststoffe Lithiumsulfid ($Li_2S$) und Lithiumchlorid (LiCl) in den Porenvolumina der negativen Elektrode aus, welches zu einer (im Vergleich zu organischen Lithium-Ionen-Zellen geringfügigeren) ionischen Widerstandserhöhung führt. In der WO 2015/067795 A1 wird ein neuer $SO_2$-haltiger Elektrolyt beschrieben, der, da das Gleichgewicht im Wesentlichen schon bei der Herstellung des Elektrolyten eingestellt wurde und somit in der Batteriezelle nur noch wenige oder keine Feststoffe mehr ausfallen, in der nachfolgend beschriebenen erfindungsgemäßen Batteriezelle bevorzugt zum Einsatz kommt. Dieser wird im Folgenden als aluminiumoxychloridhaltiger Elektrolyt bezeichnet.

Die auf der Oberfläche der negativen Elektrode beginnende metallische Lithiumabscheidung in $SO_2$-haltigen Elektrolyten ist, wie in der entsprechenden Literatur beschrieben, kinetisch gehemmt. Die Ausbildung von wachstumsfähigen Lithiummetallkeimen erfolgt erst dann, wenn das Elektrodenpotential der negativen Elektrode einen Wert von unter ca. -50 mV gegenüber Li/Li+ erreicht hat. Erst dann bilden sich die sogenannten Lithiummetallwhisker, die mit zunehmender Stromstärke dicker werden und einen Durchmesser von bis zu ca. 2 $\mu$m erreichen können.

Wie aus Untersuchungen bekannt, ist Lithiummetall in eingepackter Form, d.h. in Hohlräumen kleiner 100 $\mu$m, bevorzugt kleiner 50 $\mu$m und besonders bevorzugt kleiner 10 $\mu$m (z. B. zwischen 20 um-Körnern) eines inerten Materials, nicht mehr oder nur sehr langsam reaktiv. Frisch abgeschiedenes unverpacktes metallisches Lithium, welches in größerem Volumen vorliegt, ist sehr reaktiv und setzt große Wärmemengen frei. So reagiert das metallische Lithium nach der Formel:

$$6\,Li + SO_2 \rightarrow Li_2S + 2\,Li_2O$$

mit ca. 1600 kJ pro Formelumsatz.

Beispielsweise hat eine prismatische 50 Ah-Lithium-Ionen-Zelle mit $SO_2$-haltigem Elektrolyten ein Kopfvolumen (oberes unterhalb des Deckels liegendes freies Volumen in der Batteriezelle, wie später definiert) von ca. 50 ml, das im Wesentlichen bei Raumtemperatur z. B. mit Argon von ca. l bar Druck gefüllt ist. Würde nun l $mm^3$ (entsprechend ca. 0,5 mg) frisch an der oberen Kante der negativen Elektrode abgeschiedenes unverpacktes Lithium (ca. 2 mAh) nach obiger Formel abreagieren, so würde der Druck im Kopfvolumen der Lithium-Ionen-Zelle mit $SO_2$-haltigem Elektrolyten um über 1,5 bar ansteigen.

Metallisches Lithium ist also hochreaktiv. Insbesondere Volumina größer als 1 $mm^3$ sind als kritisch zu betrachten.

$$V_{krit} = 1mm^3$$

Bei der üblichen Herstellung von langlebigen Lithium-Ionen-Zellen mit $SO_2$-haltigem Elektrolyten werden Zellengehäuse bevorzugt aus Metall (z. B. tiefziehfähigem Edelstahl 1.4301 oder 1.4306) verwendet. Deckel und gegebenenfalls Boden werden verschweißt. Werden bei den Lithium-Ionen-Zellen mit $SO_2$-haltigem Elektrolyten mögliche Fehler im Produkt, z. B. durch Verwendung des aluminiumoxychloridhaltigen Elektrolyten, und in der Produktion, z. B. durch Ausschluss von Feuchtigkeit, vermieden, so ist die kalendarische Langlebigkeit von einigen Jahren oder Jahrzehnten noch nicht gewährleistet. Denn sowohl beim lang andauernden stationären Betrieb als auch bei dem durch Temperaturwechsel und mechanischen Belastungen härteren Einsatz in der Elektromobilität kann es über Fehlerstellen zum Eintrag von Wasserdampf in die Batteriezelle und damit zu einer lokalen Degradation der negativen Elektrode kommen. Für eine auf Langlebigkeit konstruierte Batteriezelle sind im Wesentlichen drei Schwachpunkte für Fehlerstellen aufzuführen: die Glasdurchführungen, die Berstscheibe und die Schweißnähte.

- Glasdurchführung:
  Zur Gewährleistung der elektronischen Isolation und der hermetischen Dichtigkeit werden die stromführenden Pole gegenüber dem Gehäuse der Batteriezelle durch Glasdurchführungen isoliert. Die Glasdurchführungen enthalten einen (hohlen) Metallzylinder, der mit den Ableitelementen verbunden und durch eine Glaseinfassung gegenüber dem Deckel elektronisch isoliert ist. Diese Glasdurchführungen sind anfällig für Mikrorisse, die durch mechanische Belastungen, z. B. bei der Montage der Ableitelemente, der externen Verkabelung und/oder durch Vibrationen bzw. durch thermische Belastung im Betrieb entstehen können.
- Berstscheibe:
  Bei hohem Innendruck in der Batteriezelle, z. B. durch Temperaturen weit oberhalb der höchstzulässigen Betriebstemperatur, soll die Berstscheibe öffnen, um den Innendruck kontrolliert abzulassen. Eine Berstscheibe kann dabei aus einem definiert dünnen oder lokal dünn geprägten Blech bestehen, das bei einem vorgegebenem Druck aufreißt. An diesen dünnen Stellen ist die Gefahr, dass Mikrorisse, z. B. durch Korrosion oder Vibration auftreten, besonders hoch.
- Schweißnähte:
  Alle Teile des Gehäuses (Deckel, Boden, Berstscheibe oder vorkonfektionierte Glasdurchführungen) werden durch Verschweißen hermetisch dicht verbunden. Bei einer Massenproduktion von Batteriezellen sind fehlerhafte Schweißnähte mit Mikrorissen nicht ganz auszuschließen. Auch zunächst dichte aber zu dünne Schweißnähte können, z. B. durch Korrosion oder Vibration, zu Mikrorissen führen.

Hierbei können die Mikrorisse so fein sein, dass z. B. ein Ausblühen von Elektrolyt oder ein Geruch von Schwefeldioxid nicht bemerkbar ist. Über die Zeit diffundieren so beständig Schwefeldioxidmoleküle aus der Batteriezelle heraus und Wasserdampfmoleküle in diese hinein, die über längerer Zeit zu der oben beschriebenen schnelleren Degradation der negativen Elektrode führen.

Allen Fehlerstellen ist gemein, dass der Wasserdampfeintritt zunächst die Kanten der Elektroden der Batteriezelle schädigt. Vor allem die oberen Kanten der Elektroden zum Kopfvolumen hin sind gefährdet, da Glasdurchführungen, Berstscheibe und die meisten Schweißnähte in der Regel am Deckel vorhanden sind.

Untersuchungen haben ergeben, dass Separatoren, die in Lithium-Ionen-Zellen mit $SO_2$-haltigem Elektrolyten

als Barriere für metallische Abscheidungen (z. B. Lithiumwhisker) zum Einsatz kommen und neben einem feinkörnigen inerten anorganischen Material, wie z. B. Aluminiumoxid, organische Binder enthalten, nicht gegen durchwachsendes Lithium stabil sind. Flexible keramische Separatoren, die z. B. nach der WO 99/15262 auf dünnem Glasgewebe hergestellt wurden, sind sehr gut biegsam und werden üblicher Weise aufgerollt geliefert. Jedoch halten diese Verbundwerkstoffe aus keramischem Separator und Träger (z. B. Glasgewebe) gegenwachsendes Lithium nicht dauerhaft zurück. Der Grund liegt in den für die Biegung erforderlichen Mikrorissen, deren Rissbreite zu groß für die bis zu ca. 2 um dicken Lithiumwhisker ist.

Es ist vorteilhaft, für $SO_2$-haltige Lithium-Ionen-Zellen, vorzugsweise mit aluminiumoxychloridhaltigem Elektrolyten wie er vorstehend beschrieben ist, einen Separator, z. B. in Form einer Separatorschicht, bereitzustellen, der:

- mechanisch stabil ist und unversehrt beim Stapeln der Elektroden bleibt;
- gegen Lithium und dem Elektrolyten chemisch stabil ist,
- praktisch kein Wasser, keine Hydroxylgruppen und/oder keine löslichen Schwermetalle enthält und
- mechanisch stabil ist und gegenwachsendes Lithium nicht durchlässt.

Dies wird durch eine beschichtete negative Elektrode für nicht-wässrige wiederaufladbare elektrochemische Batteriezellen, umfassend:

a) eine negative Elektrode und
b) eine darauf aufgebrachte keramische Separatorschicht,

erreicht.

Wie bereits oben angegeben, kann die erfindungsgemäße beschichtete negative Elektrode für nicht-wässrige wiederaufladbare elektrochemische Batteriezellen verwendet werden, beispielsweise in an sich bekannten Lithium-Ionen-Zellen mit $SO_2$-haltigem Elektrolyt, wie sie unter anderem vorstehend und in der WO 2015/067795 A1 beschrieben sind.

Der Ausdruck "keramische Separatorschicht" im Sinne der vorliegenden Erfindung bezeichnet eine Schicht eines anorganischen, nichtmetallischen, elektronisch nicht leitenden Werkstoffs, der bezüglich der Elektronenleitung in die Klasse der Isolatoren fällt. Dieser Werkstoff basiert insbesondere auf Silikaten (Siliziumdioxid ($SiO_2$)), Aluminiumoxiden (z. B. Korund ($Al_2O_3$)), weiteren Oxiden, wie Zirkonoxid ($ZrO_2$) oder Titanoxid (TiO, $TiO_2$, $Ti_2O_3$), sowie nichtoxidischen Werkstoffen, wie Carbiden (z. B. Siliziumcarbid (SiC)), Nitride (z. B. Siliziumnitrid ($Si_3N_4$)) oder Molybdänsilizid ($MoSi_2$). Eine umfassende Definition der möglichen Werkstoffe mit detaillierten chemischen Elementen/Verbindungen findet sich in der WO 99/15262, die hiermit unter Bezugnahme in die vorliegende Anmeldung aufgenommen wird. Eine solche keramische Separatorschicht hat insofern separierende Eigenschaften, als dass diese nur Lithium-Ionen ($Li^+$) jedoch kein metallisches Lithium (Li) passieren lässt.

Wie bereits zuvor beschrieben, wandern $Li^+$-Ionen beim Laden der Batteriezelle von der positiven zu der negativen Elektrode und beim Entladen in genau entgegengesetzter Richtung. Eine erfindungsgemäße Separatorschicht verfügt über einen Porendurchmesser und eine Porosität, die einen Transport von $Li^+$ durch die Separatorschicht zulässt, jedoch ein Hindurchwachsen von metallischem Lithium verhindert.

Bei den Materialien/Werkstoffen der Separatorschicht handelt es sich insbesondere um keramische Massen, die anorganische Komponenten aufweisen. Die anorganischen Komponenten weisen im Wesentlichen zumindest eine Verbindung aus einem Metall, einem Halbmetall oder einem Mischmetall mit zumindest einem Element der Borgruppe (Erdmetalle), Kohlenstoff-Silizium-Gruppe (Tetrele), Stickstoff-Phosphor-Gruppe (Pnictogene), Sauerstoffgruppe (Chalkogene) oder Halogene (dritte bis siebte Hauptgruppe, B, Al, Ga, In, Tl, C, Si, Ge, Sn, Pb, N, P, As, Sb, Bi, O, S, Se, Te, F, Cl, Br, I)auf. Erhältlich sind diese Separatorschichten nach einem allgemeinen Aspekt durch Aufbringen einer Suspension auf die negative Elektrode und durch zumindest einmaliges Erwärmen. Die Suspension (Sol) weist mindestens eine anorganische Komponente auf, die zumindest eine Verbindung zumindest eines Metalls, eines Halbmetalls oder eines Mischmetalls mit zumindest einem Element der dritten bis siebten Hauptgruppe aufweist. Bei dem Erwärmen wird die zumindest eine anorganische Komponente aufweisende Suspension auf oder in oder auf und in dem Träger verfestigt. Dazu wird die negative Elektrode mit aufgebrachter Suspension für mehrere Sekunden bis mehrere Stunden bei Temperaturen von 50 °C bis über 750 °C erhitzt.

In einer bevorzugten Ausführungsform der beschichteten Elektrode weist die keramische Separatorschicht eine Schichtdicke von 5 $\mu$m bis 200 $\mu$m, bevorzugt 10 $\mu$m bis 50 $\mu$m und besonders bevorzugt 10 $\mu$m bis 20 $\mu$m auf. Dadurch werden die vorstehenden Effekte in besonders günstiger Weise erreicht. Die Elektroden sind mechanisch stabil und bleiben unversehrt beim Stapeln von Elektroden zu einem "Stack". Sie sind gegen Lithium und den Elektrolyten chemisch stabil und enthalten kein Wasser, keine Hydroxylgruppen und/oder lösliche Schwermetalle. Zudem sind sie nicht durchlässig für gegenwachsendes metallisches Lithium. Ferner wird durch diese Schichtdicken sichergestellt, dass fertigungsbedingte Metallschaumspitzen der negativen Elektrode, beispielsweise Nickelschaumspitzen, die je nach Kalandertechnik bzw. Bürsten der Oberfläche herausragen können, durch eine genügend dicke Separatorschicht bedeckt sind und die Oberfläche damit egalisiert ist, die beschichtete negative Elektrode also eine ebene Fläche besitzt.

Die Separatorschicht besitzt einen Porendurchmesser, der dazu eingerichtet ist, wie bereits zuvor beschrieben, einen Transport von aktiven Ionen (z. B. Li$^+$) durch die Separatorschicht zu ermöglichen, während ein Durchwachsen von aktivem Metall (z. B. metallisches Li) in Form von Metallwhiskern verhindert wird. Dazu kann die Separatorschicht je nach Elektrolyt, angelegter Spannung und Art des aktiven Metalls einen Porendurchmesser von 2 $\mu$m oder weniger besitzen.

Weiterhin ist eine beschichtete Elektrode bevorzugt, die durch vorstehendes Verfahren erhältlich ist, in dem die Komponenten für die keramische Separatorschicht, als Suspension/Sol auf die negative Elektrode aufgebracht und anschließend bei einer Temperatur von 50 °C bis über 750 °C für Sekunden bis Stunden erwärmt (getempert bzw. gesintert) werden. Dieses Tempern bzw. Sintern kann unter Inertgas, wie beispielsweise Stickstoff (N$_2$) oder Argon (Ar), erfolgen. Auf diese Weise werden die vorstehenden Effekte, nämlich dass die Elektrode mechanisch stabil ist und unversehrt beim Stapeln der Elektroden bleibt, gegen Lithium und dem Elektrolyten chemisch stabil ist, praktisch kein Wasser oder keine Hydroxylgruppen oder lösliche Schwermetalle enthält und gegenwachsendes Lithium nicht durchlässt, in besonders günstiger Weise erreicht. Ferner erfolgt eine besonders vorteilhafte, nämlich festhaftende Verbindung zwischen der keramischen Separatorschicht und der negativen Elektrode. Auch werden dadurch keramische Separatorschichten erhalten, die sich im Vergleich zu anderen Herstellungsverfahren dadurch auszeichnen, dass die sie keine Mikrorisse aufweisen.

Als besonders günstig, vor allem zum Erzielen der vorstehenden Vorteile hat es sich erwiesen, dass mindestens eine Komponente der anorganischen Separatorschicht in der Suspension als Sol vorliegt. Der Ausdruck Sol im Sinne der vorliegenden Erfindung bezeichnet eine kolloidale Dispersion in der ein fester oder flüssiger Stoff in feinster Verteilung in einem festen, flüssigen oder gasförmigen Medium dispergiert ist. Vorzugsweise ist im Sol ein fester Stoff in einem flüssigen Medium dispergiert (Suspension).

Beispielsweise kann die Oberfläche der negativen Elektrode mit einer Suspension aus Silicasol (Levasil, Bayer AG) und 20 nm Aluminiumoxid (Partikel von durchschnittlich 20 nm Durchmesser) 20 $\mu$m dick beschichtet und anschließend bei 450 °C im Inertgas während 5 Minuten getempert werden. Oder die Oberfläche der negativen Elektrode kann mit einer Suspension aus Zirkonsol mit 50 nm Zirkondioxid (Partikel von durchschnittlich 50 nm Durchmesser) 50 $\mu$m dick beschichtet und anschließend im Inertgas bei 450°C für 5 Minuten getempert werden.

Die Herstellung solcher keramischer Schichten ist dem Fachmann an sich bekannt, so dass er die entsprechenden Materialien und Verfahrensschritte kennt. Beispielhaft sei hier auf die WO 99/15262 verwiesen. Andere Verfahren finden sich beispielsweise in der DE 10055610 A1, in der in den Beispielen a) bis c) die Herstellung einer Keramikfolie beschrieben wird, bei der keine höhere Temperatur angewendet werden muss. In der DE 10142622 A1 wird ein Separator auf Glasgewebe nach obigen Methoden beschrieben. In der DE 10208280 A1 werden Separatoren auf Polymermembranen hergestellt. Der Temperaturbereich, der in den Beispielen aufgeführt wird, ist niedriger. Da in der vorliegenden Erfindung die Graphitelektrode mit der feuchten Beschichtung im Inertgas erhitzt wird, sind niedrigere Temperaturen hierfür nicht zwingend erforderlich. Sichergestellt sollte aber werden, dass die negative Elektrode insbesondere also sowohl das Graphit als auch die Separatorschicht wenig Wasser (weniger als 100 ppm, vorzugsweise weniger als 50 ppm) enthält. In der DE 10238944 A1 werden ebenfalls Herstellungsbeispiele benannt. Die DE 10238943 B4 handelt von einer Separatorschicht auf einer positiven Elektrode. In der DE 10255123 A1 wird die Herstellung von wasserarmen Separatoren mit Hilfe des Einbringens von lithiumhaltigen Verbindungen oder der chemischen Nachbehandlung des Separators mit lithiumhaltigen Lösungsmitteln beschrieben. In der DE 10255122 A1 wird auf einer grobporösen eine feinkörnige Schicht aufgebracht.

Wie bereits vorstehend beschrieben wurde, wird die keramische Separatorschicht auf die negative Elektrode aufgebracht. Dabei können an sich bekannte negative Elektroden eingesetzt werden, vor allem solche, die für Batteriezellen verwendet werden, die einen SO$_2$-haltigen Elektrolyten aufweisen. Solche negativen Elektroden sind dem Fachmann bekannt. Die aktiven Massen der negativen Elektroden basieren als mikrometergroße Partikel oder Nanomaterialien beispielsweise auf Kohlenstoff, wie Graphit, weichem oder hartem Kohlenstoff, Lithiumtitanoxiden, wie Li$_4$Ti$_5$O$_{12}$, Silizium.

Die negative Elektrode kann als elektronischer Ableiter und mechanischer Träger einen Metallschaum umfassen. Als Metallschäume kommen dabei alle Schäume in Frage, die Metalle oder deren Legierungen umfassen. Bevorzugt sind Metallschäume, die in der SO$_2$-haltigen Elektrolytlösung stabil sind, wie z. B. Fe, Co, Ni, Mn, Cr, W, V, Ti, Mo, Zr. Besonders bevorzugt sind Metallschäume aus Nickel oder Edelstahl. Andere Metalle, wie z. B. Al, Cu, Zn, Ag, die ebenfalls als Schäume gefertigt werden können, werden durch eine Schutzbeschichtung, z. B. mit W, korrosionsstabil gegen den SO$_2$-haltigen Elektrolyten (vgl. DE 10128970 A1). Vorzugsweise wird in den Metallschaum Graphit als aktive Masse ohne Binder eingebracht und durch Kalandern auf die gewünschte Porosität verdichtet.

Die negative Elektrode wie auch die positive Elektrode haben im Allgemeinen die Form eines Quaders, der eine Höhe H, eine Breite B und eine Dicke D aufweist, wobei H >= B > D ist. Die Fläche, die von H x B aufgespannt wird, heißt Hauptfläche, kann einer Elektrode entgegengesetzter Polarität gegenüber liegen und kann der Vorderseite bzw. der Rückseite entsprechen. Die Fläche, die von H x D aufgespannt wird, heißt lange Kantenfläche und kann der linken bzw. der rechten Fläche entsprechen. Die Fläche, die von B x D aufgespannt wird, heißt kurze Kantenfläche und kann der oberen bzw. der unteren Fläche entsprechen, wobei mit oberer kurzer Kantenfläche die Fläche bei den Ableitelementen bezeichnet wird.

Ein Ableitelement ist ein elektronischer Leiter, der, wie oben für den Metallschaum beschrieben, aus einem Metall bzw. beschichteten Metall bestehen kann. Das Ableitelement ist z. B. eine Fahne oder ein Draht, einerseits mit einer positiven oder negativen Elektrode elektronisch verbunden und andererseits beispielsweise an einen Metallzylinder der Glasdurchführung im Gehäuseinneren angeschweißt oder durch einen metallischen Hohlzylinder der Glasdurchführung nach außen geführt und dort verschweißt. Dieser Metallzylinder oder metallische Hohlzylinder bildet einen Pol. Die elektronische Verbindung zu der positiven oder negativen Elektrode kann stoff-, form- und/oder kraftschlüssig erfolgen. In einer Ausführungsform kann die elektronische Verbindung über ein gefalztes Metallblech, also in einer Ausführungsform über das Ableitblech, erfolgen, das an die obere kurze Kantenfläche umklappend angeschweißt oder geklemmt wird.

Bei der beschichteten Elektrode ist die keramische Separatorschicht insbesondere auf der vorderen und/oder hinteren Hauptfläche der negativen Elektrode aufgebracht.

Vorzugsweise können die Hauptflächen der negativen Elektroden sowohl in der Höhe H als auch in der Breite B größer als die Hauptflächen der positiven Elektroden sein.

Vorzugsweise ist auch die Kapazität der von der positiven Elektrode bedeckten Hauptfläche der negativen Elektrode größer als die Kapazität der Hauptfläche der positiven Elektrode.

Bevorzugt wird ferner eine wiederaufladbare elektrochemische Batteriezelle, umfassend mindestens eine positive Elektrode, einen $SO_2$-haltigen und aluminiumoxychloridhaltigen Elektrolyten und mindestens eine beschichtete negative Elektrode, wie sie vorstehend beschrieben ist, verwendet.

Vorzugsweise kann die Batteriezelle weiterhin ein Gehäuse aufweisen, das ein Seitengehäuse, einen Deckel und einen Boden umfasst, mindestens ein Ableitelement für die mindestens eine negative Elektrode, mindestens ein Ableitelement für die mindestens eine positive Elektrode, mindestens eine Durchführung (z. B. eine Glasdurchführung) für das/die Ableitelement(e) der negativen Elektrode(n), mindestens eine weitere Durchführung (z. B. eine Glasdurchführung) für das/die Ableitelement(e) der positiven Elektrode(n), wobei sich zwischen einer Kante der oberen kurzen Kantenfläche der Elektroden und einer unteren Fläche des Deckels ein Zwischenraum (Kopfvolumen) befinden kann.

Der Stapel, also der sogenannte Stack, einer Batteriezelle besteht mindestens aus einer positiven und einer zur positiven Elektrode hin mit Separator optional beschichteten negativen Elektrode. Vorzugsweise weist ein Stack der Batteriezelle mehrere beidseitig mit Separator beschichtete negative Elektroden und mehrere positive Elektroden auf, die wechselweise gestapelt sind. Dabei kann bevorzugt jeweils eine negative Elektrode die äußerste (vorderste/hinterste) Elektrode des Stacks bilden. Besonders bevorzugt sind die äußersten negativen Elektroden nach innen zur Glasdurchführung) für das/die Ableitelement(e) der positiven Elektrode(n), wobei sich zwischen einer Kante der oberen kurzen Kantenfläche der Elektroden und einer unteren Fläche des Deckels ein Zwischenraum (Kopfvolumen) befinden kann.

Der Stapel, also der sogenannte Stack, einer Batteriezelle besteht mindestens aus einer positiven und einer zur positiven Elektrode hin mit Separator optional beschichteten negativen Elektrode. Vorzugsweise weist ein Stack der Batteriezelle mehrere beidseitig mit Separator beschichtete negative Elektroden und mehrere positive Elektroden auf, die wechselweise gestapelt sind. Dabei kann bevorzugt jeweils eine negative Elektrode die äußerste (vorderste/hinterste) Elektrode des Stacks bilden. Besonders bevorzugt sind die äußersten negativen Elektroden nach innen zur positiven Elektrode mit Separator beschichtet, nach außen sind sie nicht mit Separator beschichtet.

Unabhängig von der Anzahl der gestapelten Elektroden im Stack (also der Stackdicke in Relation zur Stackbreite) werden im Folgenden die geometrischen Bezeichnungen für die Flächen des Stacks von der Einzelelektrode her übernommen.

Durch die zuvor beschriebene Separatorschicht kann zwar ein Durchwachsen von metallischen Abscheidungen beispielsweise in Form von Metallwhiskern (z. B. aus Lithium) effektiv verhindert werden, jedoch kann ein Eindringen von Wassermolekülen während der Lebenszeit der Batteriezelle, wie zuvor beschrieben, nicht vollständig ausgeschlossen werden. Daher bilden sich an den Kanten der negativen Elektroden metallische Abscheidungen des aktiven Metalls. Somit kann vor allem in der Nähe der Kanten der negativen Elektrode eine Ansammlung von hochreaktivem metallischem Lithium erfolgen, die das kritische Volumen $V_{krit}$ erreichen kann.

Gemäß der Erfindung weist die Batteriezelle eine Indikatorelektrode auf. Diese ermöglicht das Erkennen metallischer Abscheidungen des aktiven Metalls, insbesondere das Erkennen metallischer Abscheidungen in größeren Volumina. Wird eine solche metallische Abscheidung erkannt, so können entsprechende Maßnahmen ergriffen werden, um ein weiteres Anwachsen metallischer Abscheidungen zu verhindern. So kann der Ladevorgang beendet und/oder die Batteriezelle ganz außer Betrieb genommen werden, wenn bei einem Aufladevorgang ein Metallwhisker auf der negativen Elektrode entsteht und dieser mittels der Indikatorelektrode detektiert wird.

Die Indikatorelektrode kann zwischen dem Gehäuse und dem Stack in der Batteriezelle angeordnet sein. Sie weist zumindest an ihrer Oberfläche einen Das elektrochemische Potential der Indikatorelektrode wird bestimmt durch das verwandte Metall der Indikatorelektrode. Bei Nickel und Edelstahl liegt es bei über 3 V vs. Li/Li$^+$. Das Potential ist stabil, solange keine metallische Abscheidung des aktiven Metalls eine elektronisch leitende Verbindung zu der negativen Elektrode herstellt.

Kommt das aktive Metall in Form eines Whiskers ausgehend von beispielsweise der negativen Elektrode in Kontakt mit der Indikatorelektrode, so sinkt das Potential der Indikatorelektrode gegenüber der negativen Elektrode messbar ab und es fließt ein ebenfalls messbarer Strom zwischen der negativen Elektrode und der Indikatorelektrode. Das entstehende Signal in Form eines gemessenen Spannungsabfalls und/oder eines gemessenen Stroms kann als Signal (Trigger) für eine Trennung der Batteriezelle vom Stromkreis genutzt werden, so dass beispielsweise ein Aufladevorgang beendet werden kann. Dies verhindert rechtzeitig ein weiteres Abscheiden von metallischem Li, bevor das kritische Volumen $V_{krit}$ erreicht wird, indem die Batteriezelle vorher abgeschaltet bzw. abgekoppelt wird.

Die Indikatorelektrode kann als dünnes Indikatorblech (Blech, Lochblech, Streckmetall) ausgebildet sein. Solch ein Indikatorblech ist einfach zu fertigen und somit eine kostengünstige Form für die Indikatorelektrode.

Alternativ kann die Indikatorelektrode einen Schichtaufbau aufweisen, bei dem eine dünne und elektrisch leitende Schicht auf einem Trägermaterial angeordnet ist. Solch ein Schichtaufbau lässt sich beispielsweise durch Bedampfen/ Besputtern von Nickel oder Edelstahl auf ein dünnes Glasgewebe (40 $\mu$m) erreichen.

Ferner kann die Indikatorelektrode über der Kante der oberen kurzen Kantenfläche und/oder unter der Kante der unteren kurze Kantenfläche des Stacks ausgebildet sein. Alternativ oder zusätzlich kann die Indikatorelektrode neben der Kante der rechten langen Kantenfläche und/oder neben der Kante der linken langen Kantenfläche des Stacks ausgebildet sein. Zudem kann die Indikatorelektrode alternativ oder zusätzlich neben der Kante der vorderen Hauptfläche und/oder neben der Kante der hinteren Hauptfläche des Stacks ausgebildet sein.

Die Indikatorelektrode kann bevorzugt auch teilweise oder vollständig durch das Gehäuse selbst gebildet werden. Da in diesem Fall metallisches Lithium von der oberen kurzen Kantenfläche der negativen Elektroden durch das Kopfvolumen wachsen müsste, um das Gehäuse als Indikatorelektrode zu erreichen, kann ein Teil der Indikatorelektrode z. B. in Form eines Indikatorblechs in unmittelbarer Nähe der oberen kurzen Kantenfläche des Stacks positioniert werden. In diesem Falle umfasst die Indikatorelektrode das Indikatorblech. Dies ermöglicht einen besonders kompakten Aufbau der Batteriezelle mit Indikatorelektrode.

Um ein Wachstum der Metallwhisker von der negativen Elektrode zu der Indikatorelektrode nicht zu behindern und damit das Erkennen einer metallischen Abscheidung zu ermöglichen, muss die Batteriezelle so ausgebildet sein, dass eine metallische Abscheidung die Indikatorelektrode erreichen und elektrisch kontaktieren kann. Dennoch muss beim Erkennen von Metallwhiskern, z. B. Lithiummetallwhiskern, gewährleistet sein, dass das Volumen der zu erkennenden Metallwhisker nicht das kritische Volumen $V_{krit}$ erreicht, bevor der elektronische Kontakt zu der Indikatorelektrode hergestellt ist. Das Erkennen eines Metallwhiskers muss also möglich sein, noch bevor dieser das kritische Volumen $V_{krit}$ erreicht.

In einer Ausführungsform kann die detektierende Indikatorelektrode in einem genügend geringen Abstand von den Elektroden des Stacks angeordnet sein, so dass ein wachsender Whisker die negative Elektrode des Stacks mit der Indikatorelektrode elektronisch kontaktiert, bevor der Whisker das kritische Volumen $V_{krit}$ erreicht. Dadurch wird sichergestellt, dass Metallwhisker durch elektronische Kontaktierung der Indikatorelektrode erkannt werden, noch bevor das kritische Volumen $V_{krit}$ von Metallwhiskern erreicht wird.

In einer weiteren bevorzugten Ausführungsform kann die Batteriezelle eine poröse Isolatorschicht aufweisen, welche die Indikatorelektrode elektronisch von mindestens der positiven und/oder negativen Elektrode isoliert. Weiterhin kann die Batteriezelle, sofern die Indikatorelektrode nicht von dem Gehäuse gebildet wird, eine poröse Isolatorschicht aufweisen, welche die Indikatorelektrode vom Gehäuse elektronisch isoliert.

Als poröse Isolatorschicht zwischen der Indikatorelektrode und den Elektroden des Stacks kann eine poröse keramische Isolatorschicht eingesetzt werden. Alternativ bzw. in Kombination innerhalb einer Batteriezelle kann auch beispielsweise ein Glasgewebe verwendet werden. Die poröse keramische Isolatorschicht kann in gleicher Weise wie die zuvor beschriebene keramische Separatorschicht auf wenigstens einer der kurzen Kantenflächen und/oder einer der langen Kantenflächen und/oder der vordersten oder hintersten Hauptfläche der Elektroden des Stacks aufgebracht werden.

Die poröse Isolatorschicht kann eine Schichtdicke im Mikrometerbereich oder weniger aufweisen, wobei eine Schichtdicke von 20 $\mu$m bis 1000 $\mu$m bevorzugt wird.

Ferner kann die poröse Isolatorschicht einen mittleren Porendurchmesser im Mikrometerbereich aufweisen, wobei ein Porendurchmesser von 3 $\mu$m bis 100 $\mu$m bevorzugt wird.

Wird aktives Metall (z. B. Li-Metall) an der Kante der negativen Elektrode, wie oben beschrieben, abgeschieden, d. h. es entsteht ein Metallwhisker, so wird das weitere Wachstum der metallischen Abscheidung in Richtung der positiven Elektrode von der Separatorschicht blockiert. Das Wachstum in Richtung der Indikatorelektrode jedoch wird nicht von der porösen Isolatorschicht behindert. Die poröse Isolatorschicht ist auf Grund des minimalen Porendurchmessers, z. B. von 3 um, so ausgebildet, dass die Whisker durch die Poren hindurchwachsen bzw. hindurchgedrückt werden können. Dabei wird durch den maximalen Porendurchmesser, z. B. von 300 $\mu$m, bevorzugt kleiner 200 $\mu$m und besonders

bevorzugt kleiner 100 $\mu$m verhindert, dass sich unverpacktes aktives Metall in Mengen nahe dem kritischen Volumen bildet, bevor die Indikatorelektrode von der Abscheidung des aktiven Metalls elektronisch kontaktiert wird. Dabei muss das aktive Metall ausgehend von einer negativen Elektrode bis hin zu der Indikatorelektrode vollständig von der porösen Isolatorschicht umgeben sein, um ein Erreichen des kritischen Volumens $V_{krit}$ zu vermeiden. Gegebenenfalls wächst ein Metallwhisker zunächst zwischen negativer Elektrode und Separatorschicht begrenzt bis zur Kante der negativen Elektrode und erst nach Erreichen der Kante der negativen Elektrode durch die poröse Isolatorschicht zur Indikatorelektrode. Dabei wird eine übermäßige Ansammlung von aktivem Metall erst durch die Elektrode und die Separatorschicht und anschließend durch die poröse Isolatorschicht verhindert.

Eine Ansammlung von aktivem Metall in Form eines Metallwhiskers wird somit durch die Wahl eines geeigneten Abstands zwischen Indikatorelektrode und Elektroden des Stacks und/oder den mittleren Porendurchmesser der Isolatorschicht auf Volumen unterhalb des kritischen Volumens $V_{krut}$ beschränkt.

Ein weiterer Aspekt der Erfindung betrifft wiederum die Langlebigkeit der Batteriezelle mit $SO_2$-haltigem Elektrolyten verbunden mit der Erkennung von Sicherheitsrisiken auch zum Ende der Lebensdauer. Insbesondere bei hoher Leistungsentnahme aus der Batteriezelle und/oder einem Ausfall der Kühlung können im Innern der Batteriezelle Temperaturen entstehen, die durch Innendruckerhöhung zu einem Aufblasen, also zu einer mechanischen Verformung der Batteriezelle führen können. Dadurch können Hohlräume in der Batteriezelle entstehen, die zu einer Abscheidung von unverpacktem Lithiummetall führen und damit das Konzept der Indikatorelektrode unwirksam werden lassen. Weiterhin korrodieren über Jahre bzw. Jahrzehnte des Betriebs der Batteriezelle die hochstromführenden Pole bzw. deren Verbinder. Dies führt zu Widerstandserhöhung und zur Leistungsabnahme der Batteriezelle.

In den eingangs diskutierten Anwendungen werden keine einzelnen Batteriezellen benötigt, sondern eine Vielzahl zu Batteriemodulen zusammengeschalteter Batteriezellen. Üblicherweise werden hierbei mehrere Batteriezellen seriell oder parallel zu einem Batteriemodul zusammengeschaltet. Mehrere Batteriemodule bilden dann wiederum die Batterie.

Ohne Beschränkung der Allgemeinheit wird hier im Folgenden der Aufbau eines Batteriemoduls, bestehend aus mehreren seriell verschalteten Batteriezellen, vorgestellt. Dabei werden die mehreren Batteriezellen komplett mit elektrischen Verbindern und gegebenenfalls zwei zusätzlichen Modulpolen vorkonfektioniert, gegebenenfalls zwischen den Batteriezellen und an den beiden Batteriezellen an den Enden des Moduls mit Kühlschlangen versehen.

Je nach Anwendung stehen im Hinblick auf Gewicht und Kosten drei Möglichkeiten zur Verfügung, die auch in Kombination miteinander angewendet werden können:

- Die Batteriezellen im Batteriemodul werden teilweise, also um die Hauptflächen und die langen Kantenflächen der Batteriezellen oder komplett, also auch um die Deckel und Böden, mit Harz, z. B. Epoxidharz, in einem Gehäuse des Batteriemoduls eingegossen, so dass letztendlich ein einziger Modulkasten entsteht.
- Die Haupt- und langen Kantenflächen der Batteriezellen werden vollständig oder teilweise mit z.B. Epoxidharz getränktem Glasgewebe bzw. Kunststoffgewebe ummantelt.
- Analog zu diesem Verfahren können auch Gewebe auf Basis von Carbon verwendet werden, die zu einem besonders leichten Modulkasten führen. Wegen der Evakuierung und Temperaturbehandlung zur Herstellung des carbonbasierten Modulkastens empfiehlt es sich, die Elektrolytbefüllung der Batteriezellen erst anschließend durchzuführen. Das Modul mit 6 mm Schichtdicke kann dabei einem Innendruck der Zellen von bis zu 21 bar standhalten.

Auch der obere Teil des Modulkastens, also dort wo die Deckel, Pole und Verbinder liegen, kann bis auf die optional vorhandenen Berstscheiben komplett vergossen werden. In der Regel ist für jedes Gehäuse mindestens eine Berstscheibe vorgesehen, die bei einem vordefinierten Druck nachgibt. Dabei kann die Berstscheibe bevorzugt bei 5 bar, besonders bevorzugt bei 10 bar und insbesondere bevorzugt bei 21 bar bersten.

Berstscheibenöffnungen werden z. B. durch einen aufgeklebten Ring mit oben liegender Kunststofffolienabdeckung gebildet.

KURZE FIGURENBESCHREIBUNG

Die Erfindung wird nachfolgend unter Bezugnahme auf die Figuren und Beispiele veranschaulicht ohne sie darauf zu beschränken. Es wird darauf hingewiesen, dass die Merkmale der einzelnen Ausführungsformen beliebig miteinander kombiniert werden können.

Figur 1      zeigt eine schematische Darstellung einer erfindungsgemäßen Batteriezelle mit Indikatorelektrode und optionaler poröser Isolatorschicht.

Figur 2      zeigt eine schematische Darstellung eines gestapelten Aufbaus von positiven und negativen Elektroden.

Figur 3    zeigt eine schematische Darstellung einer anderen Ausführungsform der erfindungsgemäßen Batteriezelle mit optionalen Separatorschichten und diversen porösen Isolatorschichten.

Figur 4    zeigt schematisch eine weitere Ausführungsform der Batteriezelle mit Indikatorelektrode und optionaler poröser Isolatorschicht.

Figuren 5, 6    zeigen je eine schematische Darstellung einer weiteren Ausführungsform der erfindungsgemäßen Batteriezelle mit poröser Isolatorschicht.

AUSFÜHRLICHE BESCHREIBUNG

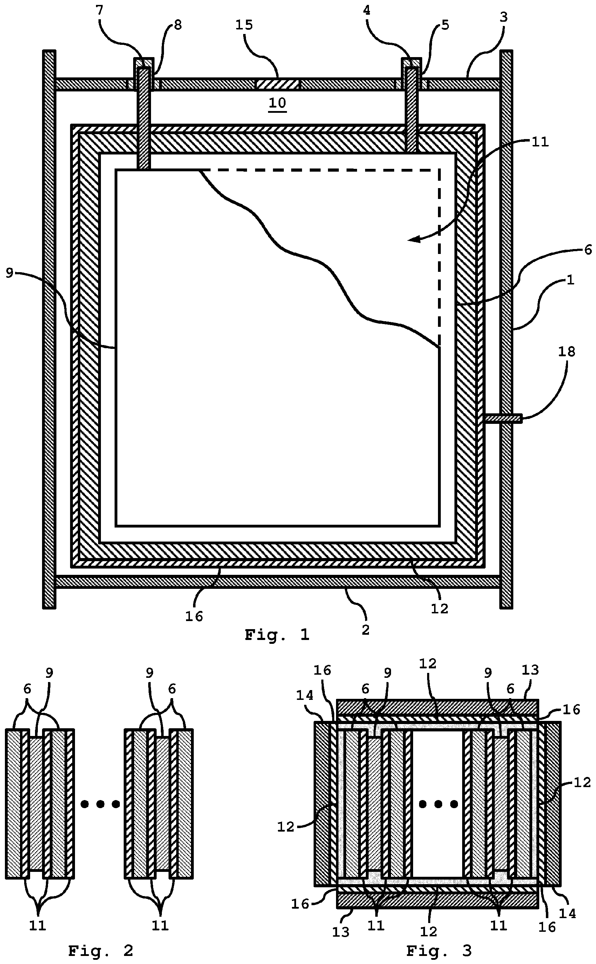

Fig. 1 zeigt eine nicht-wässrige, wiederaufladbare, elektrochemische Batteriezelle, umfassend ein Gehäuse, welches ein umlaufendes Seitengehäuse 1, einen Deckel 3 und einen Boden 2 umfasst, mindestens eine negative Elektrode 6, mindestens ein Ableitelement der negativen Elektrode 4 für die negative Elektrode 6, mindestens eine positive Elektrode 9; mindestens ein Ableitelement der positiven Elektrode 7 für die positive Elektrode 9, mindestens einen negativen Pol mit Glasdurchführung für Ableitelemente der negativen Elektrode 5 für mindestens ein Ableitelement der negativen Elektrode 4, mindestens einen positiven Pol mit Glasdurchführung für Ableitelemente der positiven Elektrode 8 für mindestens ein Ableitelement der positiven Elektrode 7, und einen Elektrolyten, wobei sich zwischen oberer kurzer Kantenfläche der Elektroden 6, 9 und der unteren Fläche des Deckels 3 ein Zwischenraum 10 (Kopfvolumen) befindet.
Auf die negative Elektrode 6 kann optional eine Separatorschicht 11 in zuvor beschriebener Art und Weise auf der vorderen und/oder hinteren Hauptfläche aufgebracht sein.
Dabei wird ein Stack durch einen Stapel aus mindestens einer negativen Elektrode 6 und mindestens einer positiven Elektrode 9 gebildet. Bevorzugt kann je eine negative Elektrode 6 die jeweils äußere Elektrode des Stacks bilden. Optional kann zwischen der mindestens einen negativen Elektrode 6 und der mindestens einen positiven Elektrode 9 eine Separatorschicht 11 angeordnet sein.
Ferner kann eine Berstscheibe 15 vorgesehen sein.
Weiterhin kann eine Indikatorelektrode 16 um den Stack, also umfassend die mindestens eine negative Elektrode 6, die mindestens eine positive Elektrode 9 und optional die Separatorschicht 11, herum vorgesehen sein. Die Indikatorelektrode 16 kann aus einem beliebigen elektrisch leitfähigen Material gefertigt sein, welches gegenüber den Bestandteilen des Elektrolyten und dem aktiven Metall (hier Lithium) chemisch beständig ist. Die Indikatorelektrode 16 kann dabei über ein Ableitelement 18 der Indikatorelektrode und eine weitere Glasdurchführung (hier nicht eingezeichnet) elektronisch nach außen geführt oder über ein Ableitelement mit dem Gehäuse verbunden sein (hier ebenfalls nicht eingezeichnet).
Die Indikatorelektrode 16 kann in einem Abstand zum Stack angeordnet sein, der eine elektronische Isolation zwischen der Indikatorelektrode 16 und den Elektroden des Stacks bewirkt. Dabei ist der Abstand so gewählt, dass eine Abscheidung aktiver Masse, hier also des aktiven Metalls, die Indikatorelektrode 16 elektronisch kontaktiert, bevor das kritische Volumen $V_{krit}$ erreicht ist.
An der oberen und unteren kurzen Kantenfläche und/oder der linken und rechten langen Kantenfläche und/oder der vorderen und/oder hinteren Hauptfläche der negativen Elektrode 6 und/oder der positiven Elektrode 9 bzw. des Stacks kann alternativ, wie zuvor beschrieben, eine poröse Isolatorschicht 12 aufgebracht sein.
Die poröse Isolatorschicht 12, welche aufgrund ihrer Porenstruktur und dem minimalen Porendurchmesser (z. B. 3 $\mu$m) bzw. dem mittleren Porendurchmesser von metallischen Abscheidungen des aktiven Metalls, also Metallwhiskern, (hier bevorzugt Li) durchwachsen werden kann, ist zwischen dem Stack und der Indikatorelektrode 16 angeordnet. Die poröse Isolatorschicht 12 wird wie zuvor beschrieben in ähnlicher Weise wie die Separatorschicht 11, jedoch mit angepasstem Porendurchmesser, gefertigt. Der maximale Porendurchmesser ist dabei so gewählt, dass eine metallische Abscheidung das kritische Volumen $V_{krit}$ nicht erreicht, bevor die metallische Abscheidung die Indikatorelektrode 16 elektronisch kontaktiert. Eine Ansammlung von aktivem Metall in einer einzelnen Pore der Isolatorschicht wird so auf ein Volumen unterhalb des kritischen Volumens $V_{krit}$ beschränkt.
Beim Betrieb der Batteriezelle, insbesondere aber nicht ausschließlich beim Aufladevorgang, wird die Spannung der Indikatorelektrode 16 gegenüber der negativen Elektrode 6 ermittelt. Solange keine metallische Abscheidung eine elektronische Verbindung zwischen negativer Elektrode 6 und der Indikatorelektrode 16 herstellt, weist die Spannung einen Wert deutlich über Null Volt auf. Sobald eine metallische Abscheidung (Whisker), die typischerweise an der negativen Elektrode beginnt, die Indikatorelektrode erreicht und damit kontaktiert, fällt die Spannung auf unter 3 Volt, unter 2 Volt, unter 1 Volt oder auf nahezu Null Volt ab. Dieser Spannungsabfall signalisiert damit eine metallische Abscheidung. Ebenso kann der mit dem Spannungsabfall verbundene Stromfluss als Signal genutzt werden.
Eine entsprechende Gegenmaßnahme (z. B. Abbrechen des Ladevorgangs, Aussondern der betroffenen Batteriezelle, usw.) kann dann eingeleitet werden, bevor das kritische Volumen erreicht wird. Dies erhöht die Sicherheit von Batteriezellen deutlich.

Eine Separatorschicht 11 darf zwischen einem Stack und der Indikatorelektrode 16 nicht vorhanden sein, da diese ein Metallwhiskerwachstum von einer der negativen Elektroden zu der Indikatorelektrode 16 behindern könnte. Vielmehr kann die poröse Isolatorschicht 12, die das Durchwachsen nicht behindert, jedoch den unmittelbaren elektronischen Kontakt bspw. durch ein Aufliegen zwischen Stack und Indikatorelektrode verhindert, dort angeordnet sein. Der Stack und die Indikatorelektrode 16 können mit weiteren porösen Isolatorschichten 13, 14 umgeben bzw. gegeneinander isoliert sein. Diese porösen Isolatorschichten können z. B. durch Umwicklungen mit Glasgewebe oder beschichtetem Glasgewebe gebildet werden.

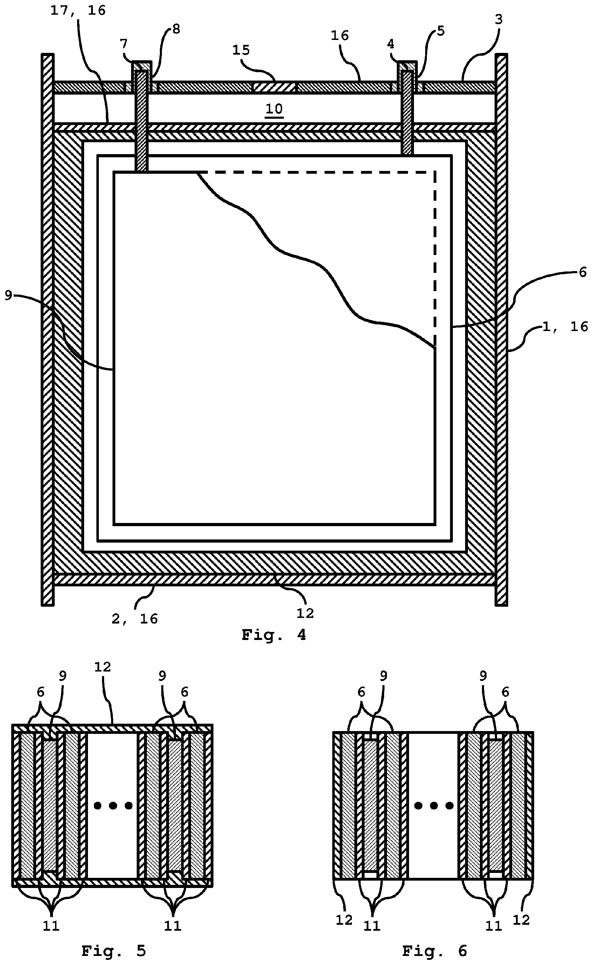

Die Indikatorelektrode 16 muss ferner von dem Gehäuse elektronisch isoliert sein, sofern das Gehäuse oder Teile davon nicht als Indikatorelektrode dienen, wie nachfolgend zu Fig. 4 noch erläutert wird. Dies kann durch einen ausreichenden Abstand oder eine beliebige Isolatorschicht sichergestellt werden, wobei das Ableitelement für die Indikatorelektrode 18 in diesem Fall eine Kontaktierungsmöglichkeit außerhalb des Gehäuses bereitstellt.

Die Batteriezelle kann dabei so aufgebaut sein, dass die positive Elektrode 9 $LiFePO_4$ aufweist, der Elektrolyt ein $SO_2$-haltiger Elektrolyt ist und die negative Elektrode 6 als aktives Material Graphit enthält, das insbesondere in einem Metallschaum (z. B. Nickelschaum) vorliegt.

Zellen mit $SO_2$-haltigem Elektrolyten besitzen in der Regel ein festes Gehäuse, wobei das Material des Gehäuses Metall (z. B. Edelstahl) aufweisen kann. Im Falle von tiefgezogenem Gehäuse ist der Boden 2 Teil des Seitengehäuses 1. Im Falle von verschweißten oder gepressten Zellengehäusen sind der Boden 2 sowie der Deckel 3 separate Bauteile, die mit dem Seitengehäuse 1 fest verbunden sind, beispielsweise durch formschlüssige Verbindungen und/oder materialschlüssige Verbindungen und/oder durch kraftschlüssige Verbindungen (Presssitz, Verschraubung, Nieten, Schweißen, Kleben, etc.) mit optionaler Dichtung. An den in den Deckel 3 ggf. eingelassenen negativen Pol mit Glasdurchführung für Ableitelemente der negativen Elektrode 5 sind über die Ableitelemente der negativen Elektrode 4 die negativen Elektroden 6 und an den in dem Deckel 3 ggf. eingelassenen positiven Pol mit Glasdurchführung für Ableitelemente der positiven Elektrode 8 sind über die Ableitelemente der positiven Elektrode 7 die positiven Elektroden 9 angeschlossen. Einzelne negative Elektroden 6 und positive Elektroden 9 können wie bereits erwähnt abwechselnd zu einem Stack gestapelt (z. B. 6, 9, 6, 9, ..., 9, 6) (vgl. Fig. 2) vorliegen.

Wegen des $SO_2$-Dampfdruckes und zur Vermeidung von eindringenden Gasen, wie z. B. Wasserdampf, ist das Zellengehäuse in geeigneter Weise hermetisch abgeschlossen (z. B. verschweißt). Die Pole mit Glasdurchführungen für die Ableitelemente 5, 8 sorgen in der Regel für eine hohe, jahrzehntelange Dichtigkeit. Im Allgemeinen sind dabei in dem Deckel 3 zwei Pole mit Glasdurchführungen 5, 8, mindestens eine für die positiven und mindestens eine für die negativen Elektroden 6, 9 eingeschweißt. Das Gehäuse ist in diesem Aufbau elektronisch von den Elektroden und den Polen isoliert.

Alternativ sind andere Aufbauten möglich, wie z. B. den Pol mit Glasdurchführung der einen Elektrodenart, z. B. den positiven Pol mit Glasdurchführung 8 des Ableitelements 8 der positiven Elektrode 9, in der oberen Abdeckung 3 und den Pol mit Glasdurchführung der anderen Elektrodenart, z. B. den negativen Pol mit Glasdurchführung 5 des Ableitelements 4 der negativen Elektrode 6, am Boden 2, bzw. umgekehrt, oder unter Nutzung des Gehäuses als Ableiter mit nur einer Glasdurchführung für eine Elektrodenart in dem Deckel 3 und der Kontaktierung der anderen Elektrodenart über das Gehäuse am Boden 2.

Die erfindungsgemäße Batteriezelle kann für mobile und stationäre Anwendungen ausgestaltet sein.

Die Batteriezelle kann auch mehrere negative Elektroden 6 und mehrere positive Elektroden 9 aufweisen, siehe Fig. 2, die in einer Ausführungsform abwechselnd zu einem Stack gestapelt sind, wobei die jeweils äußersten Elektroden eines so gebildeten Stacks negative Elektroden 6 sind. Aus Fig. 2 ist ersichtlich, dass sich dabei die optionale Separatorschicht 11 jeweils auf beiden Flächen der negativen Elektroden 6 befindet, die den positiven Elektroden 9 gegenüber angeordnet sind. In einer bevorzugten Ausführungsform sind die beiden negativen Elektroden 6, die den Anfang und das Ende des Stacks bilden, nicht mit der optionalen Separatorschicht 11 versehen.

Dabei können die negativen Elektroden 6 in Höhe und Breite größer als die positiven Elektroden 9 sein. Ferner kann die optionale Separatorschicht 11 so ausgestaltet sein, dass sie die negative Elektrode 6 egalisiert. Weiterhin kann jeweils die Kapazität der Hauptflächen der negativen Elektroden 6, die von den positiven Elektroden 9 bedeckt werden, größer als die der positiven Elektroden 9 sein. Dies kann beispielsweise dadurch erreicht werden, dass die negativen Elektroden 6 bzw. in den beschatteten Flächen der negativen Elektroden 6 mehr kapazitätsbezogene Masse des aktiven Materials aufweisen, z. B. mindestens 5 % mehr, besonders bevorzugt 10 % bis 20 % mehr, als in den positiven Elektroden 9.

Wie Fig. 3 zu entnehmen ist, kann der Stack der Batteriezelle die poröse Isolatorschicht 12 auf den Hauptflächen (vorderste und hinterste), den oberen und/oder unteren kurzen Kantenflächen und ggf. auf den linken und/oder den rechten langen Kantenflächen (nicht dargestellt) der negativen Elektroden 6 und der positiven Elektroden 9 aufweisen. Die poröse Isolatorschicht 12 kann aus den Materialien mit größerer Korngröße hergestellt sein, wie sie vorstehend in Zusammenhang mit der keramischen Separatorschicht 11 beschrieben sind. Das Material der porösen Isolatorschicht 12 kann bis auf die größere Korngröße gleich oder verschieden von dem verwendeten Material der keramischen Separatorschicht 11 sein. Wenn für die poröse Isolatorschicht 12 ein anderes Material als das für die keramische Separatorschicht 11 verwendete eingesetzt wird, dann sollte es so gewählt sein, dass es bei niedrigen Temperaturen gesintert werden kann.

Wie in Fig. 1 und 3 dargestellt, kann auf die poröse Isolatorschicht 12 die Indikatorelektrode 16 aufgebracht werden.

Wie Fig. 3 weiterhin zu entnehmen ist, kann der Stack mit den negativen Elektroden 6 zusammen mit der optionalen keramischen Separatorschicht 11, den positiven Elektroden 9 und ggf. der porösen Isolatorschicht 12 und der Indikatorelektrode 16 allseitig mit einer ersten gewickelten porösen Isolatorschicht 13 und mit einer zweiten gewickelten porösen Isolatorschicht 14 umwickelt sein. Das Material für die erste und zweite gewickelte poröse Isolatorschicht 13, 14 kann dabei bis auf die Korngröße aus den gleichen Materialien ausgewählt werden, wie sie vorstehend für die keramische Separatorschicht 11 angegeben sind, die günstiger Weise zur Erreichung der erforderlichen Flexibilität auf ein an sich bekanntes Glasgewebe aufgebracht sein können. Die Umwicklung mit der ersten und zweiten porösen Isolatorschicht 13, 14 kann dabei so erfolgen, dass sie in unterschiedliche Richtungen gewickelt werden, wobei optional die beiden Wickelrichtungen senkrecht zueinander stehen. Beispielsweise kann die erste gewickelte poröse Isolatorschicht 13 vertikal und die zweite 14 dazu horizontal gewickelt werden.

Dabei können durchaus ein oder mehrere unterschiedliche Schichten der diversen porösen Isolatorschichten 12, 13 und 14 aufgebracht werden. Die Schichten können auch Glasfasern oder Polymerfasern enthalten.

Wie vorstehend beschrieben wurde, können im Stack optional die obere und/oder die untere kurze Kantenfläche der negativen Elektrode 6 ebenfalls mit der Suspension zur Herstellung der porösen Isolatorschicht 12, gegebenenfalls in größerer Schichtdicke, beschichtet werden.

Die positive Elektrode 9 kann mit LEP (Lithiumeisenphosphat) als aktiver Masse und einem üblichen organischen Binder sowie einem leitfähigen Zusatz (zusammen die positive Masse) hergestellt werden. Dabei wird vorzugsweise nicht ein Metallschaum, wie Nickelschaum, als Träger verwendet. Denn zum einen können beim Stapeln der Elektroden Nickelschaumspitzen der positiven Elektrode 9 die Separatorschicht 11 auf der negativen Elektrode 6 beschädigen. Zum anderen sind die positiven Elektroden 9 mit Metallschaumträger zu starr, so dass Hohlräume bei Verformung der Batteriezelle entstehen können. Vorzugsweise werden Kohlenstofffaservliese als elektronische Leiter und als dreidimensionaler Träger der positiven Masse verwendet. Sie sind flexibler und elastischer als Nickelschaumelektroden und passen sich geringfügigen Unebenheiten der negativen Elektroden 6 gut an.

Jedoch könnte die gegenüber Nickelschaum geringere elektrische Leitfähigkeit des Kohlenstofffaservlieses nachteilig sein. Dieser Nachteil kann zumindest teilweise durch elektronisch leitfähige Zusätze oder Galvanisierung verringert werden. In einer Ausführungsform kann die Batteriezelle eine Kompositelektrode z. B. zwei Kohlenstofffaservliese mit einem dazwischen angeordneten Ableiter, z. B. Nickelstreckmetall, aufweisen.

Die negativen Elektroden 6 können in der Hauptfläche die positiven Elektroden 9 an allen Kanten (vgl. Fig. 2 und 3) überragen. Vorzugsweise überragen die negativen Elektroden die positiven um mehr als 0,1 mm, besonders bevorzugt mehr als 0,5 mm.

Die negativen und positiven Elektroden 6, 9 können in einer Halterung zu einem Stack gestapelt werden (vgl. Fig. 2 und 3), wobei negative Elektroden 6 die erste und letzte Elektrode in dem Stack sein können. Die Flächen des Stacks können mit einem feinkörnigen inerten Material (z. B. 10 μm Aluminiumoxid) mit anorganischem oder mit organischem Binder, wie THV (Dyneon THV™ FP (polymer of tetrafluoroethylene, hexafluoropropylene and vinylidene fluoride)), oder auch ohne Binder beschichtet werden. Die Beschichtung kann dabei über eine Paste, die das anorganische Material, gegebenenfalls den Binder und ein leichtflüchtiges organisches Lösungsmittel enthält, erfolgen. Der an den Flächen beschichte Stack kann anschließend vorzugsweise allseitig mit einer flexiblen porösen Isolatorschicht 13, 14 umwickelt (vgl. Fig. 3) und in das Gehäuse eingebracht werden.

Um Sicherheitsprobleme weiter zu minimieren, kann das Kopfvolumen 10 mit einem inerten körnigen Material (z. B. feinkörniges Siliziumdioxid) mit oder ohne Binder gefüllt sein.

Die Füllung mit dem flüssigen Elektrolyten erfolgt vorzugsweise durch eine Öffnung von unten. Die Temperatur der Batteriezelle und des Elektrolyten können dabei vorzugsweise unterhalb der Siedetemperatur des Elektrolyten liegen. Die Elektrolytmenge ist vorzugsweise so bemessen, dass das Kopfvolumen 10 nicht vollständig ausgefüllt wird.

Die Herstellung der positiven Elektrode 9 und die Montage der Batteriezelle werden bevorzugt in einem Trockenraum ausgeführt. Die negative Elektrode mit der keramischen Separatorschicht kann nach dem Tempern noch heiß in den Trockenraum eingebracht werden.

Mehrere Batteriezellen können zu einem Batteriemodul in einem äußeren Gehäuse verschaltet werden. Um eine möglichst hohe mechanische Stabilität zu erhalten, werden die Batteriezellen in eine Form vorzugsweise mit Distanzhaltern zwischen den Batteriezellen untereinander und zwischen den Batteriezellen und einer Formwand eingebracht. Sollten die Batteriezellen im Modul aktiv gekühlt werden, können Kühlschlangen auch als Distanzhalter fungieren. Nach der elektrischen Verschaltung der Batteriezellen und gegebenenfalls der Montage der Modulelektronik mit Modulpolen wird die Form mit einem Vergussmaterial, z. B. Epoxidharz, verfüllt. Gegebenenfalls werden mit Epoxidharz gesättigte Glasgewebe oder Carbongewebe für den Aufbau des Modulkastens eingesetzt. Dabei werden auch die Anschlüsse der Durchführungen 4, 7 mit vergossen, lediglich die Berstscheiben 15 bleiben frei.

Mit keramischer Separatorschicht beschichtete Elektroden können in einer Ausführungsform wie folgt hergestellt werden.

Beispiel 1: Elektrode mit Separatorschicht

In einen Nickelschaum mit einer Dicke von ca. 1,6 mm und einem mittleren Porendurchmesser von ca. 300 $\mu$m wird eine Paste aus Graphit und organischem Lösungsmittel (Isopropanol) eingebracht. Nach Entfernen des Lösungsmittels wird der Graphit enthaltende Nickelschaum auf eine vorgegebene Porosität des Graphits von 30% und eine Dicke von 0,5 mm gewalzt. Das auf der Oberfläche liegende Graphit wird abgebürstet, bis die Struktur des Nickelschaums hervortritt.

Die Oberflächen der Hauptflächen werden mit einer Suspension aus Silicasol (Levasil, Bayer AG) und 20 nm Aluminiumoxid 20 $\mu$m dick beschichtet und anschließend bei 450°C im Inertgas Argon für 20 Minuten getempert.

Beispiel 2: Elektrode mit Separatorschicht

Beispiel 2 wird wie Beispiel 1 durchgeführt, wobei die Oberflächen der Hauptflächen mit einer Suspension aus Zirkonsol mit 50 nm Zirkondioxid 50 $\mu$m dick beschichtet und anschließend im Inertgas Argon bei 450°C 20 Minuten getempert werden.

Fig. 4 zeigt eine weitere Ausführungsform der Batteriezelle. In dieser Ausführungsform ist keine Separatorschicht 11 eingezeichnet, jedoch kann die gezeigte Batteriezelle dennoch mit der zuvor beschriebenen Separatorschicht 11 ausgeführt werden. Das Seitengehäuse 1 zusammen mit dem Boden 2 und dem Indikatorblech 17 bilden in dieser Ausführungsform die Indikatorelektrode 16.

In bestimmten Fällen kann es allerdings sinnvoll sein, dass die Indikatorelektrode 16 alleine durch das Indikatorblech 17 (mit einem entsprechenden Ableitelement zur Kontaktierung von außen) gebildet wird. Alternativ kann die Indikatorelektrode auch durch das Gehäuse oder Teile des Gehäuses bzw. durch das Seitengehäuse 1 und/oder den Boden 2 mit oder ohne das Indikatorblech 17 oder den Deckel 3 gebildet werden.

Zwischen dem Stack der Batteriezelle, der wie in den vorherigen Figuren beschriebenen Ausführungsbeispielen ausgestaltet sein kann, und der Indikatorelektrode 16 kann eine poröse Isolatorschicht 12 angeordnet sein. Die poröse Isolatorschicht 12 kann bis auf die Korngröße aus dem gleichen Material wie die Separatorschicht 11 bestehen. Ferner kann die Isolatorschicht 12 in ähnlicher Weise, wie es zuvor für die Beschichtung der negativen Elektrode 6 mit der Separatorschicht 11 beschrieben wurde, auf die obere und/oder untere Kantenfläche (siehe Fig. 5) und/oder die linke und/oder die rechte Kantenfläche und/oder die vordere und/oder die hintere Hauptfläche (siehe Fig. 6) des Stacks aufgebracht werden. Dabei ist der mittlere Porendurchmesser so gewählt, dass sich metallische Abscheidungen, beispielsweise Metallwhisker (Lithiumwhisker), ungehindert von der elektrochemischen Zelle, hier insbesondere der Kante der oberen Kantenfläche der negativen Elektrode 6, zu der Indikatorelektrode 16 bzw. zum Indikatorblech 17 bilden können. Die Isolatorschicht 12 lenkt dabei das Wachstum etwaiger metallischer Abscheidungen, z. B. Metallwhisker, zu der Indikatorelektrode 16.

Erreicht eine metallische Abscheidung die Indikatorelektrode 16, so wird eine elektrische Verbindung zwischen einer Elektrode der elektrochemischen Zelle, hier der negativen Elektrode 6, und der Indikatorelektrode 16 hergestellt und die zuvor elektrisch isolierte Indikatorelektrode 16 wird von ihrem Potential auf das Potential der kontaktierten negativen Elektrode 6 gezogen. Dabei treten eine Spannungsänderung an der Indikatorelektrode 16 und ein Stromfluss zwischen der Indikatorelektrode und der kontaktierenden Elektrode auf. Die Spannungsänderung und/oder der Stromfluss zwischen Indikatorelektrode 16 und negativer Elektrode 6 kann zwischen dem negativen Pol mit Glasdurchführung für Ableitelemente der negativen Elektrode 5 und dem Ableitelement 18 (mit nicht dargestellter Glasdurchführung und Pol) gemessen werden. Sowohl die Spannungsänderung als auch der Stromfluss können einzeln oder gemeinsam als Signal (Trigger) detektiert und gemessen werden und als Auslöser für eine Abschaltung der Zelle dienen. So kann beispielsweise ein Ladevorgang einer Zelle beim Auftreten des Signals beendet werden, bevor sich metallische Abscheidungen des aktiven Metalls (hier Lithium) in Mengen nahe des kritischen Volumens von $V_{krit}$ bilden können. Das aktive Metall muss dabei vollständig von der porösen Isolatorschicht 12 umgeben sein, um die Menge des abgeschiedenen Metalls möglichst gering zu halten bis der Kontakt zur Indikatorelektrode 16 hergestellt ist (und im weiteren Verlauf selbstverständlich auch). Durch die poröse Isolatorschicht, wird das Volumen der Metallwhisker also klein gehalten und in dem Sinne passiviert, dass keine kritische exotherme Reaktion stattfinden kann.

Dies erhöht die Sicherheit der Batteriezellen, wie beispielsweise Lithium-Ionen-Zellen, da fehlerhafte Zellen erkannt werden können.

Die Indikatorelektrode 16 kann in einer Ausführungsform als eine eigenständige Elektrode, wie in dem Ausführungsbeispiel der Fig. 1 gezeigt, ausgestaltet sein. Alternativ kann das Gehäuse zusammen mit Boden und Indikatorblech 17 der Batteriezelle die Indikatorelektrode 16 bilden, wie in Figur 4 gezeigt.

BEZUGSZEICHENLISTE

1 Seitengehäuse
2 Boden
3 Deckel
4 Ableitelement der negativen Elektrode
5 negativer Pol mit Glasdurchführung für Ableitelemente der negativen Elektrode
6 negative Elektrode
7 Ableitelement der positiven Elektrode
8 positiver Pol mit Glasdurchführung für Ableitelemente der positiven Elektrode
9 positive Elektrode
10 Zwischenraum (Kopfvolumen)
11 Separatorschicht
12 poröse Isolatorschicht
13 erste z. B. gewickelte poröse Isolatorschicht
14 zweite z. B. gewickelte, poröse Isolatorschicht
15 Berstscheibe
16 Indikatorelektrode
17 Indikatorblech
18 Ableitelement der Indikatorelektrode

**Patentansprüche**

1. Nicht-wässrige wiederaufladbare elektrochemische Batteriezelle, umfassend einen Stack, der eine positive Elektrode (9), einen $SO_2$-haltigen Elektrolyten, eine Separatorschicht (11) und eine negative Elektrode (6) umfasst, und wobei die Batteriezelle weiterhin eine Indikatorelektrode (16)umfasst, wobei die Indikatorelektrode (16) durch eine poröse Isolatorschicht (12) von der negativen und der positiven Elektrode (9) elektronisch isoliert und zur Kontaktierung durch eine metallische Abscheidung eingerichtet ist.

2. Batteriezelle nach Anspruch 1, wobei die poröse Isolatorschicht (12) ein Durchwachsen metallischer Abscheidungen zulässt.

3. Batteriezelle nach Anspruch 2, wobei die poröse Isolatorschicht (12) Poren mit einem Durchmesser von < 300 $\mu$m, insbesondere kleiner 200 $\mu$m und insbesondere bevorzugt kleiner 100 $\mu$m aufweist.

4. Batteriezelle nach einem der vorstehenden Ansprüche, wobei die poröse Isolatorschicht (12) einen minimalen Porendurchmesser von 3 $\mu$m aufweist.

5. Batteriezelle nach einem der vorstehenden Ansprüche, wobei die poröse Isolatorschicht (12) 20 $\mu$m bis 1000 $\mu$m dick ist.

6. Batteriezelle nach einem der vorstehenden Ansprüche, wobei die negative Elektrode (6) zumindest teilweise die keramische Separatorschicht (11) aufweist.

7. Batteriezelle nach einem der vorstehenden Ansprüche, weiterhin umfassend ein Gehäuse (1, 2, 3), wobei sich zwischen oberen kurzen Kantenflächen der Elektroden (6, 9) und einer unteren Fläche eines Deckels (3) ein Zwischenraum (10) befindet.

8. Batteriezelle nach Anspruch 7, wobei das Gehäuse (1, 2, 3) oder ein Teil des Gehäuses (1, 2, 3) und/oder ein Indikatorblech (17) die Indikatorelektrode (16) bilden.

9. Batteriezelle nach einem der vorstehenden Ansprüche, wobei ein Stack der Batteriezelle mehrere negative Elektroden (6) und mehrere positive Elektroden (9) abwechselnd gestapelt aufweist.

10. Batteriezelle nach einem der vorstehenden Ansprüche, wobei Breite und Höhe von Hauptflächen der negativen Elektroden (6) größer sind als Breite und Höhe von Hauptflächen der positiven Elektroden (9).

11. Batteriezelle nach einem der vorstehenden Ansprüche 7 bis 11, wobei die Separatorschicht (11) die negative Elektrode (6) egalisiert.

12. Batteriezelle nach einem der vorstehenden Ansprüche, wobei die Kapazität der negativen Elektrode (6) größer als die der positiven Elektrode (9) ist.

13. Batteriemodul bestehend aus 2 oder mehr Batteriezellen nach einem der vorstehenden Ansprüche, wobei die Batteriezellen in einem Gehäuse des Batteriemoduls mit einem Vergußmaterial vergossen werden

14. Batteriemodul nach Anspruch 14, wobei dem Vergußmaterial Glas, Kunststoff- oder Carbonfasern beigemengt sind.

15. Verfahren zum Erkennen einer metallischen Abscheidung in einer nichtwässrigen wiederaufladbaren elektrochemischen Batteriezelle nach einem der vorstehenden Ansprüche, wobei das Verfahren die Schritte umfasst:

  - Ermitteln der Spannung und/ oder des Stromes zwischen der Indikatorelektrode und der negativen Elektrode.

16. Verfahren nach Anspruch 15, weiterhin umfassend:

  - Beenden eines Aufladevorgangs, wenn die Spannung der Indikatorelektrode auf das Potential der negativen Elektrode abfällt und/ oder der Strom zwischen Indikatorelektrode und der negativen Elektrode fließt.

## Claims

1. Non-aqueous rechargeable electrochemical battery cell, comprising a stack which comprises a positive electrode (9), an $SO_2$-containing electrolyte, a separator layer (11) and a negative electrode (6), and wherein the battery cell further comprises an indicator electrode (16), wherein the indicator electrode (16) is electronically insulated from the negative and positive electrodes (9) by a porous insulating layer (12) and is designed for contacting by means of a metal deposit.

2. Battery cell according to claim 1, wherein the porous insulating layer (12) allows metal deposits to grow through.

3. Battery cell according to claim 2, wherein the porous insulating layer (12) has pores having a diameter of <300 $\mu$m, in particular less than 200 $\mu$m and particularly preferably less than 100 $\mu$m.

4. Battery cell according to one of the preceding claims, wherein the porous insulating layer (12) has a minimum pore diameter of 3 $\mu$m.

5. Battery cell according to one of the preceding claims, wherein the porous insulating layer (12) is 20 $\mu$m to 1000 $\mu$m thick.

6. Battery cell according to one of the preceding claims, wherein the negative electrode (6) at least partially comprises the ceramic separator layer (11).

7. Battery cell according to one of the preceding claims, further comprising a housing (1, 2, 3), wherein a gap (10) is located between upper short edge surfaces of the electrodes (6, 9) and a lower surface of a cover (3).

8. Battery cell according to claim 7, wherein the housing (1, 2, 3) or a part of the housing (1, 2, 3) and/or an indicator sheet (17) form the indicator electrode (16).

9. Battery cell according to one of the preceding claims, wherein a stack of the battery cell has a plurality of negative electrodes (6) and a plurality of positive electrodes (9) stacked alternately.

10. Battery cell according to one of the preceding claims, wherein the width and height of main surfaces of the negative electrodes (6) are greater than the width and height of main surfaces of the positive electrodes (9).

**11.** Battery cell according to one of the preceding claims 7 to 11, wherein the separator layer (11) equalizes the negative electrode (6).

**12.** Battery cell according to one of the preceding claims, wherein the capacity of the negative electrode (6) is greater than that of the positive electrode (9).

**13.** Battery module consisting of 2 or more battery cells according to one of the preceding claims, wherein the battery cells are encapsulated in a housing of the battery module using a potting material.

**14.** Battery module according to claim 14, wherein glass, plastics or carbon fibers are added to the potting material.

**15.** Method for detecting a metal deposit in a non-aqueous rechargeable electrochemical battery cell according to one of the preceding claims, wherein the method comprises the steps of:

- determining the voltage and/or the current between the indicator electrode and the negative electrode.

**16.** Method according to claim 15, further comprising:

- ending a charging process when the voltage of the indicator electrode drops to the potential of the negative electrode and/or the current flows between the indicator electrode and the negative electrode.

**Revendications**

**1.** Élément de batterie non aqueux électrochimique rechargeable, comprenant une pile qui comprend une électrode positive (9), un électrolyte contenant du $SO_2$, une couche de séparation (11) et une électrode négative (6), et l'élément de batterie comprenant en outre une électrode indicatrice (16), l'électrode indicatrice (16) étant isolée électroniquement des électrodes négative et positive (9) par une couche isolante poreuse (12), et étant conçue pour être mise en contact par dépôt métallique.

**2.** Élément de batterie selon la revendication 1, la couche isolante poreuse (12) permettant la traversée de dépôts métalliques.

**3.** Élément de batterie selon la revendication 2, la couche isolante poreuse (12) présentant des pores d'un diamètre inférieur à 300 $\mu$m, en particulier inférieur à 200 $\mu$m et de manière particulièrement préférée inférieur à 100 $\mu$m.

**4.** Élément de batterie selon l'une des revendications précédentes, la couche isolante poreuse (12) présentant un diamètre de pore minimal de 3 $\mu$m.

**5.** Élément de batterie selon l'une des revendications précédentes, la couche isolante poreuse (12) présentant une épaisseur de 20 $\mu$m à 1 000 $\mu$m.

**6.** Élément de batterie selon l'une des revendications précédentes, l'électrode négative (6) présentant au moins partiellement la couche de séparation (11) en céramique.

**7.** Élément de batterie selon l'une des revendications précédentes, comprenant en outre un boîtier (1, 2, 3), un espace intermédiaire (10) étant situé entre les surfaces de bord courtes supérieures des électrodes (6, 9) et une surface inférieure d'un couvercle (3).

**8.** Élément de batterie selon la revendication 7, le boîtier (1, 2, 3) ou une partie du boîtier (1, 2, 3) et/ou une feuille indicatrice (17) formant l'électrode indicatrice (16).

**9.** Élément de batterie selon l'une des revendications précédentes, une pile de l'élément de batterie présentant plusieurs électrodes négatives (6) et plusieurs électrodes positives (9) empilées alternativement.

**10.** Élément de batterie selon l'une des revendications précédentes, la largeur et la hauteur des surfaces principales des électrodes négatives (6) étant supérieures à la largeur et à la hauteur des surfaces principales des électrodes positives (9).

**11.** Élément de batterie selon l'une des revendications 7 à 11 précédentes, la couche de séparation (11) égalisant l'électrode négative (6).

**12.** Élément de batterie selon l'une des revendications précédentes, la capacité de l'électrode négative (6) étant supérieure à celle de l'électrode positive (9).

**13.** Module de batterie constitué de deux ou plusieurs éléments de batterie selon l'une des revendications précédentes, les éléments de batterie étant scellés dans un boîtier du module de batterie avec un matériau de scellement.

**14.** Module de batterie selon la revendication 14, du verre, du plastique ou des fibres de carbone étant ajoutés au matériau de scellement.

**15.** Procédé permettant de détecter un dépôt métallique dans un élément de batterie non aqueux électrochimique rechargeable selon l'une des revendications précédentes, le procédé comprenant les étapes de :

- détermination de la tension et/ou du courant entre l'électrode indicatrice et l'électrode négative.

**16.** Procédé selon la revendication 15, comprenant en outre :

- l'interruption d'un processus de charge lorsque la tension de l'électrode indicatrice chute au potentiel de l'électrode négative et/ou que le courant passe entre l'électrode indicatrice et l'électrode négative.

**Fig. 1**

**Fig. 2**

**Fig. 3**

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015067795 A1
- WO 9915262 A
- DE 10055610 A1
- DE 10142622 A1
- DE 10208280 A1
- DE 10238944 A1
- DE 10238943 B4
- DE 10255123 A1
- DE 10255122 A1
- DE 10128970 A1